**Europäisches Patentamt**

**European Patent Office**

**Office européen des brevets**

(19)

(11) Veröffentlichungsnummer: **0 146 100 B1**

(12) # EUROPÄISCHE PATENTSCHRIFT

(45) Veröffentlichungstag der Patentschrift:
13.07.88

(51) Int. Cl.⁴: **G 11 B 5/706, H 01 F 1/11, C 01 G 51/04, C 01 G 49/02**

(21) Anmeldenummer: **84115034.5**

(22) Anmeldetag: **10.12.84**

(54) **Verfahren zur Herstellung kobalthaltiger, isotroper magnetischer Eisenoxide und deren Verwendung.**

(30) Priorität: **16.12.83 DE 3345532**

(43) Veröffentlichungstag der Anmeldung:
**26.06.85 Patentblatt 85/26**

(45) Bekanntmachung des Hinweises auf die Patenterteilung:
**13.07.88 Patentblatt 88/28**

(84) Benannte Vertragsstaaten:
**DE FR GB NL**

(56) Entgegenhaltungen:
**DE - A - 2 508 155
FR - A - 2 157 896
FR - A - 2 230 590**

**ZEITSCHRIFT FÜR ANORGANISCHE UND ALLGEMEINE CHEMIE, Band 331, 1964, Seite 231; A. KRAUSE et al.: "Die Herstellung eines wasserfreien Kobalt(II)-ferrits CoFe2O4 auf nassem Wege"**

(73) Patentinhaber: **BASF Aktiengesellschaft, Carl-Bosch-Strasse 38, D-6700 Ludwigshafen (DE)**

(72) Erfinder: **Steck, Werner, Dr., Auerstrasse 4, D-6700 Ludwigshafen (DE)**
Erfinder: **Sarnecki, Wilhelm, Dr., Haeusermuehlberg 32, D-8493 Koetzing (DE)**
Erfinder: **Jakusch, Helmut, Dr., Lorscher Ring 6 c, D-6710 Frankenthal (DE)**
Erfinder: **Marosi, Laszlo, Dr., Leuschnerstrasse 32, D-6700 Ludwigshafen (DE)**

## Beschreibung

Die Erfindung betrifft ein Verfahren zur Herstellung kobalthaltiger isotroper magnetischer Eisenoxide der Formel $(Co_xFe_{1-x})O[Fe_2O_3]$ mit Werten für x von 0,08 bis 0,8 durch Umsetzung von nadelförmigem $\gamma$-FeOOH mit zweiwertigen Kobalt- und Eisenionen in alkalischem Medium in Inertgasatmosphäre.

Die Entwicklung der magnetischen Aufzeichnungsträger ist seit geraumer Zeit, insbesondere durch die Anforderungen bei der Daten- und Videosignalspeicherung, auf Aufzeichnungen in hoher Dichte gerichtet. Für diesen Zweck werden Aufzeichnungsmaterialien mit äusserst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundenen Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich. Doch sind dieser Massnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelement als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Problemen der Herstellung solcher homogener Metallschichten vor allem mechanische Probleme bei deren Benutzung auf.

Im Hinblick auf die aufgezeigten Schwierigkeiten und im Bestreben, dennoch magnetische Aufzeichnungssysteme, welche eine hohe Aufzeichnungsdichte bei hohen Ausgangspegeln aufweisen, bereitzustellen, wurde auch bereits vorgeschlagen, eine zum Aufzeichnungsträger senkrechte magnetische Aufzeichnung vorzunehmen. Hierzu müssten die Aufzeichnungsträger Schichten aufweisen, die zumindest in dem Schichtbereich, welcher dem Magnetkopf am nächsten lag, eine senkrechte Magnetisierung ermöglichte (US-PS 3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, untersucht. Jedoch konnten weder die Herstellung noch die erzielbaren Eigenschaften bisher befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurze Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kubischen Eisenoxide, vor allem des würfelförmigen Magnetits, aufgebaut sind. Die Herstellung dieses Magnetits ist bekannt, so z.B. ausgehend von $\alpha$-, $\beta$- oder $\gamma$-FeOOH zusammen mit $Fe(OH)_2$ (u.a. DE-OSen 25 08 155, 27 46 359, 25 08 085, JA-OS 36 932 (1983)). Auch die Herstellung von würfelförmigem Kobaltferrit aus Kobalthydroxid und $\gamma$-FeOOH ist bereits beschrieben worden (Krause et al., Z. f. anorg. Ch., Band 331, Seite 231 (1964)). Diese Materialien haben jedoch den Nachteil, dass sie sich entweder hinsichtlich der magnetischen Eigenschaften, insbesondere der Koerzitivfeldstärke oder aber bezüglich der Stabilität der magnetischen Eigenschaften bei thermischer oder mechanischer Belastung, nicht für die Anwendung bei magnetischen Aufzeichnungsträgern eignen.

Aufgabe der Erfindung war es daher, ein Verfahren zur Herstellung isotroper magnetischer Eixenoxide bereitzustellen, das sich einerseits in einfacher und wirtschaftlicher Weise mit gängigen Rohstoffen bewerkstelligen lässt und andererseits ein magnetisches Material liefert, das sich durch eine isotrope Magnetisierung, durch eine für Aufzeichnungsträger geeignete hohe Koerzitivfeldstärke und darüber hinaus vor allem durch eine besonders enge Schaltfeldstärkenverteilung der magnetisierbaren Einzelpartikel auszeichnet. Diese Eigenschaften sind insbesondere für die magnetische Aufzeichnung in hoher Dichte von Bedeutung. Zur Lösung dieser Aufgabe bot sich der Einsatz von leicht zugänglichem Eisen(II)chlorid als Ausgangsmaterial und die Modifikation von isotropem Magnetit mit Kobalt an.

Es wurde nun gefunden, dass sich die gestellte Aufgabe durch ein Verfahren zur Herstellung kobalthaltiger isotroper magnetischer Eisenoxide der Formel $(Co_xFe_{1-x})O[Fe_2O_3]$ mit Werten für x von 0,08 bis 0,8 lösen lässt, wenn zur Herstellung dieses Materials $\gamma$-FeOOH in wässriger Suspension mit Co(II)-Ionen und Fe(II)-Ionen bei pH-Werten von grösser 8 unter Inertgas bei Temperaturen zwischen 35°C und dem Siedepunkt der Suspension bei Normaldruck umgesetzt wird.

Als Ausgangsmaterial für das erfindungsgemässe Verfahren wird das auf bekannte Weise erhaltene nadelförmige $\gamma$-FeOOH, das auch als Lepidokrokit bezeichnet wird, in Form der bei seiner Herstellung angefallenen Suspension, des gewaschenen oder ungewaschenen Filterkuchens oder als getrocknetes Pigment eingesetzt.

So lässt sich das γ-FeOOH beispielsweise durch Ausfällen von Eisen(II)hydroxid aus einer Eisen(II)chloridlösung mit Ammoniak bei pH = 7 bei einer Temperatur von 20 bis 50°C und durch anschliessendes Oxidieren des ausgefällten Hydroxids mit Luft unter Beibehaltung des pH-Wertes herstellen (Schwertmann, Zeitschrift f. Anorg. Chemie 298 (1959), 337 bis 348). Aus der DE-PS 1 223 352 ist ein weiteres Verfahren zur Herstellung des Lepidokrokits bekannt, bei dem die Keimbildung durch Fällung von Eisen(II)salzlösungen mit Alkali- oder Erdalkalibasen und Oxidation des Eisen(II)hydroxids oder -carbonats mit Sauerstoff, Luft, organischen Nitroverbindungen oder anderen Oxidationsmitteln erfolgt und gegebenenfalls ein Keimwachstum des Lepidokrokits in Eisen(II)salzlösungen entweder in Gegenwart von metallischem Eisen oder in Eisen(II)salzlösungen bei gleichzeitiger Zugabe äquivalenter Mengen von Eisen(II)-Ionen und Alkali- oder Erdalkalilösungen oder -suspensionen oder bei gleichzeitiger Zugabe äquivalenter Mengen von Eisen(II)-Ionen und Alkali- oder Erdalkalibasen, -lösungen oder -suspensionen unter Verwendung der Oxidationsmittel durchgeführt wird. In ähnlicher Weise kann der Lepidokrokit auch erhalten werden, wenn in einer ersten Stufe eine Aufschlämmung von kolloidalen Lepidokrokit-Keimen erzeugt wird, indem Eisen(II)chlorid mit wässrigem Alkali vereinigt und das erhaltene Gemisch unter Einleitung eines Sauerstoff enthaltenden Gases bis zu einem pH-Wert des Gemisches zwischen 2.9 und 4.1 gerührt und dann in einer zweiten Stufe der Aufschlämmung unter kräftigem Rühren bei einer Temperatur von 26.7 bis 60°C und unter Aufrechterhaltung des pH-Wertes in Gegenwart eines Überschusses von Eisen(II)chlorid gleichzeitig und kontinuierlich Alkali und ein Sauerstoff enthaltendes Gas solange zugeführt wird, bis 1.2 bis 5 Gew.-Teile des Gesamtproduktes pro Gewichtsteil der Keimmenge gebildet worden sind. Auch nach der DE-AS 10 61 760 oder der EP-A 40 722 lassen sich geeignete γ-FeOOH-Partikel erhalten.

Gemäss dem erfindungsgemässen Verfahren wird nun eine wässrige Suspension von γ-FeOOH in einem mit einer Inertgas-, vorzugsweise Stickstoffatmosphäre versehenen Rührbehälter vorgelegt. Dazu werden unter Rühren eine Fe(II)-Salzlösung, meist FeCl$_2$ und gleichzeitig oder danach eine Co(II)-Salzlösung, meist CoCl$_2$ hinzugefügt. Nach dem Einstellen des pH-Wertes mittels NaOH, KOH oder NH$_3$ auf Werte grösser 8, oder bevorzugt mit den Alkalihydroxiden auf Werte grösser 10, wird die Reaktionsmischung unter weiterem Rühren zwischen 5 Minuten und 8 Stunden, bevorzugt zwischen 10 Minuten und 6 Stunden bei Temperaturen zwischen 35°C und dem Siedepunkt gehalten. Danach wird die nun schwarzgefärbte Suspension filtriert, der Filterkuchen mit Wasser gewaschen und der gewaschene Filterkuchen bei Temperaturen zwischen 50 und 350°C, bevorzugt in nichtoxidierender Atmosphäre getrocknet. Das auf diese Weise erhaltene magnetische Material besteht aus isotropen Teilchen der angegebenen Formel. Isotrop bedeutet im vorgegebenen Zusammenhang, dass die Teilchen weitgehend würfelförmig sind, d.h. im statistischen Mittel alle drei Raumachsen weitgehend gross sind und im einzelnen höchstens Längen-zu-Dicken-Verhältnisse bis zu 2:1 festzustellen sind.

In einer bevorzugten Ausführungsform des erfindungsgemässen Verfahrens wird die γ-FeOOH-Synthese in der vorstehend beschriebenen Weise begonnen. Jedoch wird die Reaktion nicht bis zum Ende durchgeführt, sondern bereits nach teilweisem Umsatz der Fe(II)-Ionen, d.h. nach der γ-FeOOH-Keimbildungsphase unterbrochen. Dieser nun vorliegenden γ-FeOOH-Keimsuspension werden dann eine Co(II)-Salzlösung und eine der oben angegebenen Basen nach vorherigem Abdecken des Kesselinhalts mit einer Inertgasatmosphäre unter Inertgas zugefügt. Durch die Zugabe der Base wird der noch nicht zu γ-FeOOH oxidierte Fe(II)-Anteil als Fe(OH)$_2$ ausgefällt. Mit der Ausfällung von Fe(OH)$_2$ wird dann bei erhöhten pH-Werten von grösser 8 bis etwa 14, bevorzugt 10 bis 13, die Umsetzung des γ-FeOOH zu $(Co_xFe_{1-x})O[Fe_2O_3]$ vorgenommen. Zweckmässigerweise erfolgt dies bei Temperaturen zwischen 35°C und dem Siedepunkt der Suspension. Da die Reaktion sehr rasch abläuft, genügen vor allem bei erhöhten Temperaturen Reaktionszeiten von 10 Minuten bis 8 Stunden, bevorzugt bis 6 Stunden. Die Aufarbeitung zum getrockneten Endprodukt erfolgt wie bereits beschrieben.

In einer weiteren Ausführungsform des erfindungsgemässen Verfahrens werden die Co(II)-Ionen ganz oder teilweise bereits beim Beginn der γ$_g$-FeOOH-Synthese zugesetzt. Ansonsten wird wie vorstehend beschrieben verfahren.

Die erfindungsgemäss hergestellten magnetischen Eisenoxide lassen in bekannter Weise mit oxidierenden Gasen, wie z.B. Sauerstoff oder Luft, bei Temperaturen zwischen 120 und 450°C oxidieren. Abhängig von der jeweiligen Oxidationstemperatur haben sich Oxidationszeiten zwischen 10 Minuten und 6 Stunden als zweckmässig erwiesen. Bei vollständiger Oxidation entsteht ein Pulver, zusammengesetzt aus Kobaltferrit und Co-modifiziertem Gamma-Eisen(III)oxid. Dabei lässt sich die genaue Strukturformel nicht angeben, da sich nicht zweifelsfrei festlegen lässt, wieviel der Kobalt(II)-Ionen sich im Gitter der Gamma-Eisen(III)oxidphase gelöst haben bzw. eingeschlossen sind. Bei nur teilweiser Oxidation kommt als dritte Phase noch Kobalt modifizierter Magnetit hinzu.

Weiterhin lassen sich die magnetischen Eisenoxide, hergestellt nach dem erfindungsgemässen Verfahren, in ihren magnetischen Eigenschaften, z.B. der spezifischen Magnetisierung oder zur Erhöhung der Kristallitgrösse in an sich bekannter Weise in einer reduzierenden Atmosphäre, wie z.B. Wasserstoff und/oder Kohlenmonoxid und/oder mittels organischer Substanzen, die sich in Gegenwart von Eisenoxiden zersetzen, nachbehandeln. Zur Vermeidung einer Reduktion zu metallischen Phasen ist die gleichzeitige Anwesenheit von Wasserdampf zweckmässig. Die Nachbehandlung erfolgt üblicherweise innerhalb von 10 Minuten bis 2 Stunden bei 250 bis 600°C.

Ausserdem eignen sich die magnetischen Eisenoxide gemäss der Erfindung in besonderem Masse aus Ausgangsmaterial für die Herstellung von kobalthaltigen Eisenteilchen, welche gleichfalls als magnetische Materialien bei der Herstellung von magnetischen Aufzeichnungsträgern Verwendung finden.

Dabei erfolgt die Herstellung der Metallteilchen in an sich bekannter Weise. Die bekannten Verfahren der Stabilisierung, insbesondere der Formstabilisierung, z.B. mit Sn(II)-Ionen gemäss DE-OS 1 907 691, mit Erdalkalikationen gemäss den DE-OSen 24 34 058 und 24 34 096, mit Phosphationen gemäss DE-OS 26 46 348, mit gleichzeitiger Verwendung anorganischer und organischer Substanzen gemäss DE-OS 32 28 669 und mit Silikaten/$SiO_2$ gemäss den JP-OSen 12 17 99/77 und 15 31 98/77 wie auch der Passivierung der pyrophoren Metallteilchen, lassen sich hierbei in gleicher Weise, wie aus dem Stand der Technik bekannt, heranziehen.

Schliesslich sei noch darauf hingewiesen, dass sich die erfindungsgemäss hergestellten isotropen magnetischen Eisenoxide auch zur Verwendung als Druckfarbenpigmente oder zur Herstellung magnetischer Toner eignen.

Wesentlicher Verwendungszweck der erfindungsgemäss hergestellten kobalthaltigen isotropen magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung beeinflussten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen, mit welchen die Vorteile der Aufzeichnung mittels der wirksamen Vertikalkomponente zur Erhöhung von Bilddichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. Die angegebenen Co(II)- oder Fe(II)-Prozentgehalte beziehen sich als Gew.-% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\varrho = 1.2$ g/cm³ bei den Oxiden und $\varrho = 1.6$ g/cm³ bei den Metallpigmenten bezogen. Spezifische Remanenz ($M_r/\varrho$) und Sättigung ($M_m/\varrho$) sind jeweils in [nTM³] angegeben. Die Sättigungsmagnetisierung bzw. Remanenz von Bändern werden in [mT] angegeben.

Die Schaltfeldstärkenverteilung (SFD, switching field distribution) ist ein Mass für die magnetische Einheitlichkeit einer i.a. aus magnetisierbaren Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Messgrösse für SFD wird (1-S*) herangezogen (1-S*) wird aus der Steilheit der Hysteresekurve bei M=O (d.h. Hc) gemäss der Formel $dM/dH = M_R/((1-S^*) \cdot Hc)$ gewonnen (M.L. Williams, R.L. Comstock, AIP Conf. Proc. 5, 738 (1971)).

Vergleichsversuch 1

In einem 2-l-Glasgefäss mit Rückflusskühler und Rührer wurden 50 g orangefarbenes γ-FeOOH in 750 ml Wasser unter Rühren und Inertisierung des Behälters durch Spülung mit Stickstoff bei 20°C vorgelegt. Unter kräftigem Rühren wurden 17.7 g Co(II) in Form einer 1-molaren $CoCl_2$-Lösung zugetropft. Danach wurden 40 g NaOH, gelöst in 250 ml Wasser hinzugefügt. Nun wurde unter Rühren das Reaktionsgemisch innerhalb 30 Minuten auf 95°C erhitzt und 10 Minuten auf dieser Temperatur gehalten. Es wurde nur eine geringe Farbänderung zu einem Grünton hin beobachtet. Eine nennenswerte $CoO.Fe_2O_4$-Bildung konnte nicht nachgewiesen werden.

Vergleichsversuch 2

In der in Beispiel 1 beschriebenen 6-l-Glasapparatur wurden 150 g γ-FeOOH –und 120 g NaOH in 3000 ml Wasser suspendiert bzw. gelöst. Danach wurde innerhalb einer Stunde unter Rühren auf 84°C aufgeheizt. Bereits während des Aufheizens wurde die Apparatur mit Stickstoff gespült, um eine inerte Gasatmosphäre zu erzeugen, die auch während der Folgeschritte aufrechterhalten wurde. Nach Erreichen der Temperatur von 84°C wurden 53.4 g $FeCl_2$ und 153.4 g $CoCl_2$, beide gelöst in insgesamt 500 ml Wasser, langsam innerhalb 6 Stunden zur 84°C heissen γ-FeOOH-Suspension zugetropft. Stündlich wurden Proben gezogen und magnetisch untersucht. Die Werte sind in der Tabelle 1 angegeben.

### Tabelle 1

| Proben Nr. | Verweilzeit der Probe bei 84°C [Stunden] | Hc | $\frac{Mm}{\varrho}$ | $\frac{Mr}{\varrho}$ | SFD |
|---|---|---|---|---|---|
| 1 | 1 | 30.1 | 7 | 1 | 0.94 |
| 2 | 2 | 30.4 | 7 | 1 | 0.93 |
| 3 | 3 | 30.4 | 7 | 1 | 0.95 |
| 4 | 4 | 31.1 | 7 | 1 | 0.92 |
| 5 | 5 | 29.7 | 7 | 1 | 0.94 |
| 6 | 6 | 31.3 | 7 | 1 | 0.96 |

Vergleichsversuch 3

In einem heiz- und rührbaren Glasgefäss von 1 l Volumen wurden 100 g $\gamma$-FeOOH in 280 ml Wasser und 160 ml $NH_4OH$ (25%ig) suspendiert und unter Inertisierung mit Stickstoff und Rühren auf 90°C erhitzt. Dann wurden 32 g Fe(II) in Form eine auf 90°C vorgewärmten $FeCl_2$-Lösung aus einem heizbaren Tropftrichter innerhalb 2 Minuten eingebracht. Das Reaktionsgemisch färbte sich augenblicklich schwarz, d.h., die $Fe_3O_4$-Bildung gemäss $\gamma$-FeOOH + Fe(OH)$_2$ → $Fe_3O_4$+2$H_2O$ setzte so schnell ein wie für $\beta$-FeOOH beschrieben. Nach der Zugabe der $FeCl_2$-Lösung wurden nach 5, 15 und 30 Minuten Zwischenproben gezogen, die Heizung nach 1 Stunde abgestellt und das Reaktionsgemisch auf 22°C abgekühlt. Die magnetischen Eigenschaften und der titrimetrisch bestimmte Fe(II)-Gehalt der Magnetite sind in der Tabelle 2 angegeben.

### Tabelle 2

| Proben Nr. | Probennahme nach x Minuten | Hc | $\frac{Mm}{\varrho}$ | $\frac{Mr}{\varrho}$ | SFD | Gew.% Fe(II) |
|---|---|---|---|---|---|---|
| 1 | 5 | 12.6 | 83 | 25 | 0.82 | 15.4 |
| 2 | 15 | 12.2 | 80 | 23 | 0.81 | 14.2 |
| 3 | 30 | 12.3 | 79 | 23 | 0.87 | 14.5 |
| 4 | Endprodukt | 12.4 | 82 | 24 | 0.82 | 16.0 |

Beispiel 1

Probe 1

In einem 6-l-Glasgefäss, welches in der übrigen Ausstattung dem 2-l-Gefäss des Vergleichsbeispiels 1 entspricht, wurden 150 g orangefarbenes $\gamma$-FeOOH-Pulver unter Rühren in 2250 ml Wasser suspendiert und der Behälter mittels eines Stickstoffstromes inertisiert. Nun werden bei Raumtemperatur zuerst 37.8 g Fe(II) ($\triangleq$677 ml einer 1-molaren $FeCl_2$-Lösung), 10 Minuten später 13.3 g Co(II) ($\triangleq$225 ml einer 1-molaren $CoCl_2$-Lösung) zugegeben. Unter weiterem Rühren werden nun 120 g NaOH, gelöst in 750 ml Wasser, innerhalb 10 Minuten eingebracht. Innerhalb 30 Minuten wird nun das Reaktionsgemisch bis zum Siedepunkt erhitzt und 1 Stunde am Rückfluss gehalten. Nach dem Abkühlen auf 22°C wird filtriert und mit Wasser gewaschen, bis das Filtrat neutral reagiert. Der gewaschene Filterkuchen wird dann bei 50°C im Vakuum unter einem geringen Stickstoffpartialdruck (~50 Torr) getrocknet.

Probe 2

Es wurde wie bei Probe 1 verfahren, jedoch wurden 25.2 g Fe(II) in Form einer 1-molaren $FeCl_2$-Lösung und 26.6 g Co(II) in Form einer 1-molaren $CoCl_2$-Lösung verwendet.

Probe 3

Es wurde wie bei Probe 1 verfahren, jedoch wurden 18.9 g Fe(II) in Form einer 1-molaren $FeCl_2$-Lösung und 33.2 g Co(II) in Form einer 1-molaren $CoCl_2$-Lösung verwendet.

Probe 4

Es wurde wie bei Probe 1 verfahren, jedoch wurden 12.6 g Fe(II) in Form einer 1-molaren $FeCl_2$-Lösung und 39.9 g Co(II) in Form einer 1-molaren $CoCl_2$-Lösung verwendet.

Die magnetischen Eigenschaften der Proben 1 bis 4 sowie ihre Zusammensetzung sind in Tabelle 3 angegeben.

Vergleichsversuch 4

Es wurde wie in Beispiel 1, Probe 1 beschrieben verfahren, jedoch unterblieb der Zusatz von Fe(II)-Ionen. Dafür wurden 53.2 Co(II) in Form einer 1-molaren $CoCl_2$-Lösung eingesetzt. Die Probe wurde in Abweichung von den Proben 1 bis 4 des Beispiels 1 für 4 Stunden am Rückfluss gehalten, da sich die üblicherweise rasche eintretende Schwarzfärbung der Suspension nur zögernd und nur in geringem Ausmass einstellte. Das Endprodukt war dunkelbraun und enthielt in grossem Ausmass gelbe Partikel. Die Röntgenbeugungsanalyse zeigte, dass sich das ursprüngliche $\gamma$-FeOOH (orangefarben) teilweise zu $\alpha$-FeOOH (gelb) umgelagert hatte. Magnetoxide waren nur in sehr geringem Ausmass entstanden. $CoO \cdot Fe_2O_3$ liess sich auf diesem Wege in nennenswertem Ausmass nicht herstellen. Die Ergebnisse sind in Tabelle 3 angegeben.

Tabelle 3

| | Probe Nr. | Magnetpulverwerte | | | Gew.% | Cobalgehalte Wert x in $(Co_xFe_{1-x})O[Fe_2O_3]$ | |
|---|---|---|---|---|---|---|---|
| | | Hc | $\frac{Mr}{\varrho}$ | SFD | | | |
| Beispiel 1 | 1 | 51 | 37 | 0.77 | 6.8 | | 0.28 |
| | 2 | 88 | 38 | 0.66 | 13.1 | | 0.52 |
| | 3 | 90 | 30 | 0.67 | 16.0 | | 0.64 |
| | 4 | 158 | 33 | 0.62 | 18.8 | | 0.74 |
| Vergl.-Vers. 4 | | 33 | 1 | 0.91 | – | | – |

Beispiel 2

In einem 5-1-Glasrührgefäss, dessen sonstige Ausstattung der Apparatur des Beispiels 1 entsprach, wurden 2.2 Mol $FeCl_2$ in Form einer 30.9%igen $FeCl_2$-Lösung und 2334 ml Wasser bei 20°C unter Stickstoffabdeckung (200 Nl/h) vorgelegt. Unter kräftigem Rühren (450 Upm) wurden dann 2.73 Mol NaOH innerhalb 5 Minuten zugegeben und danach noch 10 Minuten nachgerührt. Nun wurden anstelle von 200 N1/h Stickstoff 400 N1 Luft/h durch die Suspension geleitet. Nach 170 Minuten war die $\gamma$-FeOOH-Keimbildung beendet. Der pH der Suspension lag unter 4, und nun wurde die Lufteinleitung eingestellt und erneut mit 200 Nl $N_2$/h die Reaktionsmischung inertisiert. Zehn Minuten nach Beginn der Stickstoffeinleitung wurde mit 15%iger wässriger NaOH der pH-Wert auf 12 eingestellt und dabei das noch nicht umgesetzte Fe(II) (38% der ursprünglich vorgelegten Menge) als $Fe(OH)_2$ ausgefällt. Dann wurde die Suspension innerhalb 105 Minuten auf 80°C aufgeheizt. Zehn Minuten (Probe 2/1A), 1 Stunde (Probe 2/1B) bzw. 3 Stunden (Probe 2/1C) nach dem Erreichen dieser Temperatur wurden Zwischenproben gezogen. Nach insgesamt 3 Stunden bei 80°C wurde die Heizung abgestellt und der Gefässinhalt auf 22°C abgekühlt (Probe 2/1D). Die Suspensionen wurden filtriert, mit Wasser gewaschen und der gewaschene Filterkuchen bei 50°C im Vakuumtrockenschrank getrocknet. Die Pulvereigenschaften der erhaltenen $Fe_3O_4$-Proben 2/1A bis 2/1D sind in der Tabelle 4 enthalten.

Proben 2/2A bis 2/2D
Apparatur wie im Beispiel 2/1
Durchführung wie 2/1 mit folgenden Änderungen:
Vorlage: 273.5 g $FeCl_2$ in Form einer 30.9%igen $FeCl_2$-Lösung und 2347 ml Wasser. Nach beendeter $\gamma$-FeOOH-Keimbildung wurden ausserdem 15.74 g $CoCl_2.6H_2O$ (gelöst in 100 ml Wasser) hinzugefügt. Die Ergebnisse sind in der Tabelle 4 angegeben.

Proben 2/3A bis 2/3D
Apparatur wie im Beispiel 2/1
Durchführung wie 2/1 mit folgenden Änderungen:
Vorlage 268 g $FeCl_2$ in Form einer 30.8 %igen $FeCl_2$-Lösung und 2356 ml Wasser. Nach beendeter $\gamma$-FeOOH-Keimbildung wurden ausserdem 31.5 g $CoCl_2.6H_2O$ (gelöst in 100 ml Wasser) hinzugefügt. Die Ergebnisse sind in der Tabelle 4 angegeben.

Proben 2/4A bis 2/4D
Apparatur wie im Beispiel 2/1
Vorlage: 258 g $FeCl_2$ in Form einer $FeCl_2$Lösung von 30.8% und 2383 ml Wasser. Nach beendeter $\gamma$-FeOOH-Keimbildung wurden ausserdem 63 g $CoCl_2.6H_2O$ (gelöst in 100 ml Wasser) hinzugefügt. Die Ergebnisse sind in der Tabelle 4 angegeben.

Probe 2/5
Apparatur wie im Beispiel 2/1
Durchführung wie im Beispiel 2/1 mit folgenden Änderungen:
Vorlage: 245 g $FeCl_2$ in Form einer 30.8 %igen $FeCl_2$-Lösung und 2412 ml Wasser. Nach beendeter Keimbildung wurden ausserdem 94.7 g $CoCl_2.6H_2O$ (gelöst in 200 ml Wasser) hinzugefügt. Es wurden Zwischenproben gezogen. Die Ergebnisse sind in Tabelle 4 angegeben.

Probe 2/6
Apparatur wie im Beispiel 2/1
Durchführung wie im Beispiel 2/1 mit folgenden Änderungen: Vorlage: 234 g $FeCl_2$ in Form einer 30.8%igen Fe $Cl_2$-Lösung und 1439 ml Wasser. Nach beendeter Keimbildung wurden ausserdem 126.3 g $CoCl_2.6H_2O$ (gelöst in 200 ml Wasser) hinzugefügt. Es wurden keine Zwischenproben gezogen. Die Ergebnisse sind in Tabelle 4 angegeben.

Probe 2/7
Apparatur wie im Beispiel 2/1
Durchführung wie im Beispiel 2/1 mit folgenden Änderungen:
Vorlage: 223 g $FeCl_2$ in Form einer 30.8%igen $FeCl_2$-Lösung und 2479 ml Wasser. Nach beendeter Keimbildung wurden ausserdem 157.9 g $CoCl_2.6H_2O$ (gelöst in 200 ml Wasser) hinzugefügt. Es wurden keine Zwischenproben gezogen. Die Ergebnisse sind in Tabelle 4 angegeben.

Probe 2/8
Durchführung wie bei Probe 2/4D, jedoch betrug die Reaktionstemperatur nur 60°C. Es wurden keine Zwischenproben gezogen. Die Ergebnisse sind in Tabelle 4 angegeben.

Probe 2/9

Durchführung wie bei Probe 2/4D, jedoch betrug die Reaktionstemperatur nur 40°C. Es wurden keine Zwischenproben gezogen. Die Ergebnisse sind in Tabelle 4 angegeben.

Beispiel 3

Jeweils 70 g der Proben 2/1D, 2/2D, 2/3D und 2/4D wurden in einem Drehrohrofen im Luftstrom von 100 Nl/h bei 350°C innerhalb 30 Minuten oxidiert. Die Messergebnisse der resultierenden Proben 2/1D ox bis 2/4D ox sind in der Tabelle 4 jeweils bei den Ausgangsproben angegeben.

Beispiel 4

80 g der Probe 2/3D wurden in einem Wasserstoffstrom von 50 Nl/h, der zuvor durch Wasser von 60°C geleitet wurde, 30 Minuten lang bei 350°C reduziert und anschliessend ebenfalls 30 Minuten lang im Luftstrom von 100 Nl/h bei 350°C oxidiert. Die Messergebnisse der resultierenden Probe 2/3E ox sind in der Tabelle 4 angegeben.

Tabelle 4 (Beispiel 2)

| Probe Nr. | Cobaltgehalt x in $(Co_xFe_{1-x})O[Fe_2O_3]$ | Magnetpulverwerte | | | |
|---|---|---|---|---|---|
| | | Hc | $\frac{Mm}{\varrho}$ | $\frac{Mr}{\varrho}$ | SFD |
| 2/1A | 0 | 14.2 | 93 | 34 | 0.77 |
| 2/1B | 0 | 14.1 | 93 | 34 | 0.74 |
| 2/1C | 0 | 13.8 | 94 | 34 | 0.72 |
| 2/1D | 0 | 13.3 | 95 | 34 | 0.74 |
| 2/1D Ox. | 0 | 13.9 | 77 | 33 | 0.63 |
| 2/2A | 0.091 | 21.7 | 90 | 31 | 0.95 |
| 2/2B | 0.091 | 21.0 | 91 | 31 | 0.82 |
| 2/2C | 0.091 | 20.3 | 93 | 31 | 0.87 |
| 2/2D | 0.091 | 20.0 | 91 | 30 | 0.82 |
| 2/2D Ox. | 0.091 | 21.0 | 85 | 39 | 0.57 |
| 2/3A | 0.17 | 33.6 | 90 | 49 | 0.60 |
| 2/3B | 0.17 | 32.7 | 93 | 50 | 0.60 |
| 2/3C | 0.17 | 32.6 | 93 | 49 | 0.61 |
| 2/3D | 0.17 | 31.9 | 91 | 49 | 0.57 |
| 2/3D Ox. | 0.17 | 57.0 | 79 | 64 | 0.42 |
| 2/3E Ox. | 0.17 | 59.4 | 83 | 65 | 0.42 |
| 2/4A | 0.35 | 51.5 | 91 | 53 | 0.61 |
| 2/4B | 0.35 | 50.9 | 89 | 50 | 0.64 |
| 2/4C | 0.35 | 51.8 | 87 | 49 | 0.61 |
| 2/4D | 0.35 | 52.6 | 86 | 49 | 0.63 |
| 2/4D Ox. | 0.35 | 91.7 | 77 | 66 | 0.45 |

Tabelle 4 (Beispiel 2)

| Probe Nr. | Cobaltgehalt x in $(Co_xFe_{1-x})O[Fe_2O_3]$ | Magnetpulverwerte | | | |
|---|---|---|---|---|---|
| | | Hc | $\frac{Mm}{\varrho}$ | $\frac{Mr}{\varrho}$ | SFD |
| 2/5 | 0.48 | 74.0 | 86 | 56 | 0.59 |
| 2/6 | 0.61 | 63.5 | 76 | 41 | 0.57 |
| 2/7 | 0.73 | 56.9 | 65 | 34 | 0.58 |
| 2/8 | 0.35 | 56.6 | 91 | 57 | 0.61 |
| 2/9 | 0.32 | 52.9 | 93 | 57 | 0.57 |

Beispiel 5

In der im Beispiel 2 beschriebenen 5 1-Glasapparatur wurden 279 g $FeCl_2$ in Form einer 30.8%igen Lösung und 2363 ml Wasser bei 20°C unter Stickstoffbedeckung mit 200 Nl/h vorgelegt. Hierzu wurden 39.4 g $CoCl_2.6H_2D$, gelöst in 100 ml Wasser, hinzugefügt. Unter kräftigem Rühren wurden dann 2.73 Mol NaOH in Form einer 15.5%igen wässrigen Natronlauge innerhalb von 6 Minuten zugegeben, 10 Minuten nachgerührt und dann anstelle von Stickstoff 400 Nl Luft/h eingeleitet. Nach 110 Minuten Reaktionszeit waren die kobalthaltigen γ-FeOOH-Keime synthetisiert und der pH-Wert unter 4 abgefallen. Nun wurden anstelle von Luft erneut 200 Nl $N_2$/h eingeleitet und 10 Minuten später mit 15%iger NaOH ein pH-Wert von 12 eingestellt. Nun wurde die Suspension aus kobaltdotiertem γ-FeOOH und aus frisch gefälltem Fe(OH)$_2$ in 100 Minuten auf 80°C aufgeheizt. Zehn Minuten, 1 Stunde bzw. 3 Stunden nach dem Erreichen dieser Temperatur wurden Zwischenproben gezogen (Proben 3/1, 3/2 und 3/3). Nach insgesamt 3 Stunden bei 80°C wurde die Heizung abgestellt und der Gefässinhalt auf 22°C abgekühlt. Nach dem Filtrieren und Waschen mit Wasser wurde der feuchte Filterkuchen bei 50°C im Vakuumtrokkenschrank getrocknet (Probe 3/4). Die Messwerte der Proben sind in der Tabelle 5 angegeben.

Danach wurden 70 g der Probe 3/4 in einem Drehrohrofen mit 100 Nl Luft/h innerhalb 30 Minuten bei 350°C oxidiert (Probe 3/4/Ox/1). In gleicher Weise wurden ausserdem jeweils 12.5 g der Probe 3/4 im Drehrohrofen mit 50 Nl Luft/h innerhalb 30 Minuten bei den in Tabelle 5 angegebenen Temperaturen (Proben 3/4/Ox/2 bis Ox/6) oxidiert. Die Ergebnisse sind ebenfalls in Tabelle 5 angegeben.

Tabelle 5

| Probe Nr. | Magnetpulverwerte Hc | $\frac{Mm}{\varrho}$ | $\frac{Mr}{\varrho}$ | SFD | $T_{ox.}$ [°C] | |
|---|---|---|---|---|---|---|
| 3/1 | 44.5 | 84 | 49 | 0.61 | | |
| 3/2 | 42.9 | 91 | 52 | 0.61 | | $(Co_{0.23}Fe_{0.77})O[Fe_2O_3]$ |
| 3/3 | 42.2 | 81 | 49 | 0.60 | | |
| 3/4 | 42.8 | 91 | 52 | 0.62 | | |
| 3/4/Ox/1 | 82.0 | 74 | 62 | 0.39 | 350 | |
| 3/4/Ox/2 | 53.7 | 73 | 46 | 0.56 | 120 | |
| 3/4/Ox/3 | 52.8 | 77 | 45 | 0.60 | 150 | Oxidationsprodukt von |
| 3/4/Ox/4 | 51.2 | 75 | 48 | 0.58 | 180 | $(Co_{0.23}Fe_{0.77})O[Fe_2O_3]$ |
| 3/4/Ox/5 | 54.6 | 74 | 51 | 0.54 | 210 | |
| 3/4/Ox/6 | 61.1 | 73 | 55 | 0.47 | 240 | |

Beispiel 6

In der im Beispiel 2 beschriebenen 5 1-Glasapparatur wurde aus 447.75 g $FeCl_2.4H_2O$ und Wasser eine Lösung mit einem Volumen von 1500 ml hergestellt. Bei 20°C wurden unter Rühren 90 g NaOH (mit Wasser zu einem Volumen von gleichfalls 1500 ml gelöst) zugesetzt. Nun wurde anstelle von Stickstoff ein Luftstrom von 200 Nl/h durch die Suspension geleitet. Nach 2 Stunden war die $\gamma$-FeOOH-Keimbildung beendet, der ph-Wert unter 4 abgefallen. Innerhalb 30 Minuten wurde nun auf 40°C erwärmt und bei konstantem pH von 5.5 das $\gamma$-FeOOH-Wachstum durch Zugabe von NaOH (1400 ml einer wässrigen Lösung von 92.4 g NaOH) eingeleitet und nach 3.75 Stunden beendet.

In 3l der erhaltenen $\gamma$-FeOOH-Suspension wurden nun unter Inertisierung mit 100 Nl Stickstoff/h bei 25°C 152.6 g $FeCl_2.4H_2O$ und 33.15 g $CoCl_2.6H_2O$ (beide mit Wasser zu einem Volumen von 500 ml gelöst) unter Rühren hinzugegeben. Unter weiterem Rühren wurde in 45 Minuten auf 80°C aufgeheizt, danach der Stickstoffstrom auf 50 Nl/h zurückgenommen und 72.51 g NaOH (gelöst mit Wasser zu 500 ml Volumen) zugesetzt. Dann wurde das Reaktionsgemisch eine Stunde bei 80°C gehalten. Nach dem Abkühlen wurde filtriert, mit Wasser gewaschen und der Filterkuchen bei 150°C unter Inertgas in 4 Stunden getrocknet (Probe 4/1, $(Co_{0.15}Fe_{0.85})O[Fe_2O_3]$). Die Messergebnisse sind in der Tabelle 6 angegeben.

Beispiel 7

77 g der Probe 4/4 wurden in einem Drehkolben bei 250°C innerhalb 30 Minuten mit 100 Nl Luft/h oxidiert (Probe 4/2). Die Messergebnisse sind in Tabelle 6 angegeben.

Beispiel 8

74.5 g der Probe 4/1 der Zusammensetzung $(Co_{0.15}Fe_{0.85})O[Fe_2O_3]$ wurden gemäss DE-OS 26 46 348 unter kräftiger Durchmischung in einem 2l-Becherglas in 1125 ml Wasser mit 0.35 ml einer 85%igen $H_3PO_4$ und mit 0.75 g Oxalsäure eingerührt. Die Suspension wurde filtriert und getrocknet. Das resultierende Material wurde dann in einem Drehrohrofen bei 370°C innerhalb 10 Stunden in einem Wasserstoffstrom von 200 Nl/h zu kobalthaltigem Eisenpigment reduziert (Probe 4/4 (pyrophor)). Nach der 18stündigen Passivierung des pyrophoren Produktes 4/4 in einem Drehkolben bei 22°C mit einem Gemisch aus 5 Nl Luft/h und 100 Nl $N_2$/h wurde unter Weglassen des Stickstoffs noch für 30 Minuten mit 20 Nl Luft/h weiterpassiviert. Danach war das Metallpigment an der Luft bei 20°C nicht mehr selbstentzündlich. Die Messergebnisse sind in Tabelle 6 angegeben.

Tabelle 6

| Proben Nr. | Magnetpulverwerte Hc | $\frac{Mm}{\varrho}$ | $\frac{Mr}{\varrho}$ | SFD | Fe(II)-Gehalt Gew.% | |
|---|---|---|---|---|---|---|
| 4/1 | 41.6 | 83 | 43 | 0.69 | 17.45 | Oxidierte Probe |
| 4/2 | 68.3 | 77 | 60 | 0.66 | <0.1 | pyrophores Metallpig- |
| 4/4 | 46.6 | 174 | 86 | 0.73 | – | ment passiviertes |
| 4/5 | 48.7 | 155 | 78 | 0.71 | – | Metallpigment |

Beispiel 9

In einer mit 100 Teilen Stahlkugeln (2 mm Durchmesser) gefüllten Kugelmühle mit einem Füllvolumen von 250 Volumenteilen, wurden jeweils 50 Teile der in der Tabelle 7 angegebenen magnetischen Eisenoxide, 3 Teile eines langkettigen amphoteren, organophilen Dispergiermittels, 0,05 Teile eines Siliconöles und 0,5 Teile eines isomeren Carbonsäuregemisches mit einem Fliesspunkt < 5°C, 6,6 Teile eines handelsüblichen isocyanatfreien Polyesterurethans aus Adipinsäure, Butandiol-1,4 und 4,4-Dicyanatodiphenylmethan mit einem K-Wert von 61 (gemessen als 1%ige Lösung in Tetrahydrofuran) und 25 Teile eines Vinylchlorid-Maleinsäure-ethylester-Copolymeren mit einem K-Wert von 59 (ebenfalls als 1%ige Lösung in Tetrahydrofuran gemessen) sowie 78 Teile eines Gemisches aus gleichen Teilen von Tetrahydrofuran und 1,4-Dioxan zugegeben, wobei die Eingaben der angegebenen Bindemittel in Form ihrer Lösungen in dem genannten Lösemittelgemisch erfolgte. Nach einer Dispergierdauer von 3,5 Stunden wurde die Magnetdispersion filtriert und anschliessend mit einer üblichen Beschichtungseinrichtung auf eine 12 μm dicke Polyethylenterephthalatfolie gegossen, so dass nach Trocknung in einem Trockenkanal und anschliessendem Glättvorgang mit auf 80°C beheiztem Mehrwalzenkalander eine Schichtdicke von 4,1 μm erzielt wurde. Die an der Magnetschicht gemessenen magnetischen Eigenschaften sind in Tabelle 7 angegeben.

### Tabelle 7

| Beispiel | magnet. Material | Hc [kA/m] | Mr [mT] | Mr/Mm | SFD |
|---|---|---|---|---|---|
| 9a | 2/3 D | 31.6 | 158 | 0.68 | 0.47 |
| 9b | 2/3 D ox | 54.2 | 161 | 0.85 | 0.23 |
| 9c | 2/4 D | 48.2 | 152 | 0.87 | 0.54 |
| 9d | 2/4 D ox | 90.5 | 165 | 0.88 | 0.31 |

## Patentansprüche

1. Verfahren zur Herstellung kobalthaltiger, isotroper magnetischer Eisenoxide der Formel $(Co_xFe_{1-x})O[Fe_2O_3]$ mit Werten für x von 0.08 bis 0.8, dadurch gekennzeichnet, das $\gamma$-FeOOH in wässriger Suspension mit Co(II)-Ionen und Fe(II)-Ionen bei pH-Werten von grösser 8 unter Inertgas bei Temperaturen zwischen 35°C und dem Siedepunkt der Suspension bei Normaldruck umgesetzt wird.

2. Verfahren gemäss Anspruch 1, dadurch gekennzeichnet, dass kobaltfreies $\gamma$-FeOOH in wässriger Suspension mit Co(II)-Ionen und Fe(II)-Ionen bei pH-Werten von grösser 8 unter Inertgasen bei Temperaturen zwischen 35°C und dem Siedepunkt der Suspension bei Normaldruck umgesetzt wird.

3. Verfahren gemäss Anspruch 1, dadurch gekennzeichnet, dass kobalthaltiges $\gamma$-FeOOH in wässriger Suspension mit Fe(II)-Ionen und gegebenenfalls zusätzlichen Co(II)-Ionen bei pH-Werten von grösser 8 unter Inertgasen bei Temperaturen zwischen 35°C und dem Siedepunkt der Suspension bei Normaldruck umgesetzt wird.

4. Verfahren gemäss Anspruch 1, dadurch gekennzeichnet, dass frisch hergestelltes kobaltfreies $\gamma$-FeOOH in seiner salzhaltigen Herstellsuspension mit Co(II)-Ionen und Fe(II)-Ionen bei pH-Werten von grösser 8 unter Inertgasen bei Temperaturen zwischen 35°C und dem Siedepunkt der Suspension bei Normaldruck umgesetzt wird.

5. Verfahren gemäss Anspruch 1, dadurch gekennzeichnet, dass frisch hergestelltes kobalthaltiges $\gamma$-FeOOH in seiner salzhaltigen Herstellsuspension mit Fe(II)-Ionen und gegebenenfalls zusätzlichen Co(II)-Ionen bei pH-Werten von grösser 8 unter Inertgasen bei Temperaturen zwischen 35°C und dem Siedepunkt der Suspension bei Normaldruck umgesetzt wird.

6. Verwendung der gemäss einem der Ansprüche 1 bis 5 hergestellten kobalthaltigen, isotropen magnetischen Eisenoxide zur Herstellung von magnetischen Aufzeichnungsträgern.

## Claims

1. A process for the preparation of a cobalt-containing isotropic magnetic iron oxide of the formula $(Co_xFe_{1-x})O[Fe_2O_3]$, where x is from 0.08 to 0.8, wherein $\gamma$-FeOOH in aqueous suspension is reacted with CoCII) ions and Fe(II) ions at a pH of above 8, under an inert gas, at from 35°C to the boiling point of the suspension and under atmospheric pressure.

2. A process as claimed in claim 1, wherein cobalt-free $\gamma$-FeOOH in aqueous suspension is reacted with Co(II) ions and Fe(II) ions at a pH of above 8, under an inert gas, at from 35°C to the boiling point of the suspension and under atmospheric pressure.

3. A process as claimed in claim 1, wherein cobaltcontaining $\gamma$-FeOOH in aqueous suspension is reacted with Fe(II) ions and, if required, additional Co(II) ions at a pH above 8, under an inert gas, at from 35°C to the boiling point of the suspension and under atmospheric pressure.

4. A process as claimed in claim 1, wherein freshly prepared cobalt-free $\gamma$-FeOOH in its salt-containing suspension from its preparation is reacted with Co(II) ions and Fe(II) ions at a pH of above 8, under an inert gas, at from 35°C to the boiling point of the suspension and under atmospheric pressure.

5. A process as claimed in claim 1, wherein freshly prepared cobalt-containing $\gamma$-FeOOH in its salt-containing suspension from its preparation is reacted with Fe(II) ions and, if required, additional Co(II) ions at a pH of above 8, under an inert gas, at from 35°C to the boiling point of the suspension and under atmospheric pressure.

6. Use of a cobalt-containing isotropic magnetic iron oxide prepared as claimed in any of claims 1 to 5 for the production of magnetic recording media.

## Revendications

1. Procédé de préparation d'oxyde de fer magnétique isotrope, à teneur en cobalt, de formule $(Co_xFe_{1-x})O[Fe_2O_3]$ à valeurs de x de 0,08 à 0,8, caractérisé par le fait que l'on fait réagir $\gamma$-FeOOH en suspension aqueuse avec des ions Co(II) et en suspension aqueuse avec des ions Co(II) et des ions Fe(II), à des pH supérieurs à 8, sous un gaz inerte, à des températures comprises entre 35°C et le point d'ébulition de la suspension sous pression normale.

2. Procédé selon la revendication 1, caractérisé par le fait que l'on fait réagir du γ-FeOOH sans cobalt, en suspension aqueuse, avec des ions Co(II) et des ions Fe(II) à des pH supérieurs à 8, sous un gaz inerte, à des températures comprise entre 35°C et le point d'ébullition de la suspension sous pression normale.

3. Procédé selon la revendication 1, caractérisé par le fait que l'on fait réagir du γ-FeOOH à teneur en cobalt, en suspension aqueuse, avec des ions Fe(II) et éventuellement des ions Co(II) additionnels, à des pH supérieurs à 8, sous un gaz inerte, à des températures comprises entre 35°C et le point d'ébullition sous pression normale.

4. Procédé selon la revendication 1, caractérisé par le fait que l'on fait réagir du γ-FeOOH sans cobalt, fraichement préparé, dans sa suspension de préparation à teneur en sels, avec des ions Co(II) et des ions Fe(II), à des pH supérieurs à 8, sous un gaz inerte, à des températures comprises entre 35°C et le point d'ébullition de la suspension sous pression normale.

5. Procédé selon la revendication 1, caractérisé par le fait que l'on fait réagir du γ-FeOOH à teneur en cobalt, fraîchement préparé, dans sa suspension de préparation à teneur en sels, avec des ions Fe(II) et éventuellement des ions Co(II) additionnels, à des pH supérieurs à 8, sous un gaz inerte, à des températures comprises entre 35°C et le point d'ébullition de la suspension sous pression normale.

6. Utilisation de l'oxyde de fer magnétique, isotrope, à teneur en cobalt, préparé selon l'une des revendications 1 à 5 pour la fabrication de supports d'enregistrement magnétiques.